# EUROPEAN PATENT SPECIFICATION

(11) **EP 4 363 196 B1**
(45) Date of publication and mention of the grant of the patent: **25.06.2025**
(21) Application number: 21752739.9
(22) Date of filing: 29.06.2021
(51) Int. Cl.: B29C 49/64, B29C 49/78, B29C 49/06, B29K 67/00, B29K 23/00, B29L 31/00

(54) **METHOD OF HEATING A PREFORM SUITABLE FOR BLOW MOLDING**
VERFAHREN ZUM ERWÄRMEN EINER VORFORM FÜR BLASFORMEN
PROCÉDÉ DE CHAUFFAGE D'UNE PRÉFORME ADAPTÉE AU MOULAGE PAR SOUFFLAGE

(43) Date of publication of application: 08.05.2024
(73) Proprietor: Discma AG, 6331 Hünenberg (CH)
(72) Inventor: SIERADZKI, Richard, Frankfort, Illinois 60423 (US)
(74) Representative: Maidment, Marc
(86) International application number: PCT/IB2021/055813
(87) International publication number: WO 2023/275592

(56) References cited:
- EP-A1- 3 181 328
- EP-A2- 3 033 215
- US-A1- 2004 024 560
- US-A1- 2008 038 500
- US-A1- 2018 264 707

## Description

### FIELD OF THE INVENTION

The present technology relates to systems and processes for producing a plurality of preforms having a plurality of temperature profiles, including where such preforms can be subjected to blow molding processes.

### BACKGROUND OF THE INVENTION

This section provides background information related to the present disclosure which is not necessarily prior art.

Various products are distributed in plastic containers, such as containers formed from one or more polymers. Common polymers used to form containers include polyesters, such as polyethylene terephthalate (PET), high and low density polyethylenes (PE), polypropylenes (PP), and polycarbonates (PC), among others. Plastic containers can be made using various blow molding processes including injection blow molding, liquid or hydraulic blow molding, and extrusion blow molding, where such blow molding processes can employ a preform that is expanded by a fluid to form a resultant container.

Injection blow molding can be used to form certain plastic containers in one or more stages and can include use of a stretch rod. In a two-stage injection stretch blow molding process, a polymer can be first molded into a preform using an injection molding process. The preform can include the neck and finish of the container to be formed, which can include threading thereon, and a closed distal end. The preform can then be heated above the polymer glass transition temperature, optionally stretched longitudinally with a stretch rod, and blown using high-pressure gas (e.g., air) into a container conforming to a mold. As the preform is inflated, it elongates and stretches, taking on the shape of the mold cavity. The polymer solidifies upon contacting the cooler surface of the mold and the finished hollow container is subsequently ejected from the mold.

Liquid or hydraulic blow molding can form and fill a container in a single operation. A liquid product can be used to form and fill a polymeric preform within a mold into a resultant container, where the liquid product remains thereafter in the finished container. A heated preform, much like the preform used in injection blow molding, can be placed within the mold, optionally stretched, and rapidly filled using a liquid product instead of a gas to form a container therefrom. Combination of the forming and filling steps can therefore optimize packaging of a liquid product by eliminating the transport of empty containers and time demands related to subsequent filling operations.

Various types of preforms can be used in such blow molding processes. Certain embodiments of preforms include injection-molded, rotationally symmetric preforms that have an elongated, cylindrical, lateral body section, a rounded, closed bottom, and a neck section with an upper opening. Other preforms have be rotationally asymmetric with a varying thickness along an elongate axis to facilitate a material distribution that forms an asymmetric container. In either case, positioned proximate to the opening, there can be an outer threaded finish section, which can be delimited toward a bottom thereof by a collar or the like. The threaded finish section can be preserved during blow molding of the preform where the finish can form a thread for a screw cap of a finished beverage container, for example. The remaining portion of the preform, in contrast, can be deformed and stretched during the blow molding process. Preforms can be heated to predefined temperatures in order to enable blow molding in the desired manner. Heating can be performed by various means, including infrared radiation using an infrared oven, to effect defined and/or uniform temperature control of the preforms.

In particular, the polymeric material of the preform (e.g., PET) can be of such a nature that the polymer can strain harden as the polymer is stretched. Forming temperature during the blow molding process can therefore be a determinative factor in the resultant container. The strain hardening effect can be taken into consideration in the production of PET containers for the purpose of controlling and optimizing wall thickness distribution. Depending on the production process, it can be possible to apply heat via infrared radiation in such a way that the preforms are heated according to a temperature profile. In this manner, the warmer sections of the preform can be deformed with priority over other parts as long as is required for the stretching resistance resulting from strain hardening to become greater than the resistance of the adjacent cooler sections, for example. The temperature profile can be uniformly distributed around the circumference of the preforms and can vary process-dependently along the longitudinal axis of the preforms. In order to apply the desired temperature profile to the preforms, use a number of heating zones can be used, for instance up to nine or more zones. It is possible to control the plurality of different heating zones individually, whereby the selected setting is maintained constant over a longer period of operating the heating apparatus.

Preforms of different construction can require different heating regimens in preparation for blow molding into resultant containers. For example, preforms of different sizes, shapes, thicknesses, formed of or including different polymers or polymer combinations, layers, and the like can each have a predetermined temperature profile optimized for a particular blow molding process. Certain examples include different heating regimens for effecting different temperature profiles for PET preforms versus PP preforms. Other examples include different heating regimens for effecting the same temperature profile, but where the preforms have different characteristics that require different regimens to achieve the same temperature profile; e.g., preforms formed of the same material but having different thicknesses. Accordingly, various heating parameters can be tailored for particular preforms, including the number of heating zones, the temperature of certain heating zones, the exposure time to certain heating zones, and the like.

A blow molding system can often include a preform heating means in close proximity thereto, where heated preforms can be passed to a mold in short order and formed into resultant containers before a desired temperature profile of the preforms changes. A travel path of a preform through an infrared oven, for example, can be tailored to generate a predetermined temperature profile in a given preform. However, if a condition of the blow molding system and/or process is changed, it can be necessary to change the preform path or heating means to adapt to a new temperature profile for a given preform. Changes in blow molding conditions can include the use of another preform type, a change in the mold, changes in blow molding parameters, and the like. Accordingly, it can be difficult to adapt a blow molding system and/or process to changing conditions that require changes in preform temperature profiles while maintaining continuous or high throughput production of containers. Oftentimes, one or more settings may need to be changed, one or more new equilibriums reached, and one or more physical parameters may need to be adapted in the blow molding system in order to accommodate preforms having different characteristics.

Absent appropriate temperature control, a heated preform may have an improper material distribution and/or expansion during a blow molding operation and the resulting container may rupture (or "blowout") or otherwise fail an aesthetic inspection. For refined gas blow molding processes, it can be expected that from about 1500 to about 2500 containers per one million gas blow molded container will suffer from a blowout. The expected blowouts from a liquid blow molded container is roughly the same. In the instance of liquid blow molding, a blowout will result in more than escape of air and will result in an escape and possible waste of the liquid product to fill the container. When the blow molding liquid is water, a blowout may result in little more than wasted water and negligible down time to allow the blow molding equipment to dry. When the blow molding liquid is a petroleum product, medicine, or cosmetic, for example, a blowout can result in a significant of time due to cleaning procedures required to render the blow molding equipment once-again operational and can result in wasted and unusable product, each of which alone may create a significant economic impact on the blowing molding process and product cost but combined may render the liquid blow molding process economically unfeasible for packing the product. It would be desirable to develop a method of blow molding that would reduce the expected blowouts for a blow molding operation (liquid or gas) to about 25 blowouts per million containers formed.

In consideration of these issues, the present technology provides a method of determining an acceptable temperature profile of a preform prior to a blow molding operation to minimize blowouts, where the resulting blow molding operation can be maintained in a continuous or high throughput fashion.

US 2004/024560 A1 discloses a method for determining the temperature distribution throughout the thickness of a preform used in a container reheat stretch blow molding process.

EP 3181328 A1 discloses a method for indexing a preform which has been previously heated according to a determined circumferential heating profile.

US 2018/264707 A1 discloses a method for heating a preform that is rotationally symmetric about its longitudinal axis, has a standard thread, and is made of a thermoplastic material.

US2008/038500 A1 discloses a process for producing polypropylene bottles, wherein a polypropylene preform is formed by injection molding.

EP 3033215 A2 discloses systems and methods for controlling the operation of a blow molder.

### SUMMARY OF THE INVENTION

Concordant and congruous with the present invention, a method of determining an acceptable temperature profile of a preform prior to a blow molding operation to minimize blowouts has surprisingly been discovered.

In an embodiment of the invention, a method for heating a preform, the method comprises the steps of providing a plurality of preforms suitable for blow molding; inspecting each preform to identify at least a material from which the preform is formed; heating each preform; measuring the temperature of at least a portion of each preform along its longitudinal axis and around its circumference; and optimizing the heating step based on a comparison of the measuring step to the inspecting step to ensure each preform has been heated to an acceptable temperature to ensure the heating step for subsequent preforms is optimized for blow molding to militate against blowouts thereof.

In another embodiment of the invention, a method for heating a preform, the method comprises the steps of providing a plurality of preforms suitable for blow molding; inspecting each preform to identify at least a material from which the preform is formed; heating each preform; measuring the temperature of at least a portion of each preform along its longitudinal axis and around its circumference; comprising a step of compiling the measured temperatures of the at least a portion of each preform; converting the compiled measured temperatures into a three-dimensional thermal image representing the measured temperatures of the at least a portion of the preform; and optimizing the heating step based on a comparison of three-dimensional thermal image to the inspecting step to ensure each preform has been heated to an acceptable temperature to ensure the heating step for subsequent preforms is optimized for blow molding to militate against blowouts thereof.

In another embodiment of the invention, a method for heating a preform, the method comprises the steps of providing a plurality of preforms suitable for blow molding; inspecting each preform to identify at least a material from which the preform is formed; heating each preform; measuring the temperature of at least a portion of each preform along its longitudinal axis and around its circumference; comprising a step of compiling the measured temperatures of the at least a portion of each preform; converting the compiled measured temperatures into a three-dimensional thermal image representing the measured temperatures of the at least a portion of the preform; converting the three-dimensional thermal image into a two-dimensional thermal image representing the portion of the preform measured along its longitudinal axis and around its circumference; and optimizing the heating step based on a comparison of two-dimensional thermal image to the inspecting step to ensure each preform has been heated to an acceptable temperature to ensure the heating step for subsequent preforms is optimized for blow molding to militate against blowouts thereof.

### BRIEF DESCRIPTION OF THE DRAWINGS

The above, as well as other advantages of the present invention, will become readily apparent to those skilled in the art from the following detailed description of a preferred embodiment when considered in the light of the accompanying drawings in which:
Fig. 1 is a plan view schematically depicting an oven for the heat treatment and thermal imaging of preforms;
Fig. 2 is a sectional view of one of the heating means of Fig. 1 and including a preform heated thereby;
Fig. 3 is an exemplary three-dimensional thermal image of a heated preform and a corresponding two-dimensional thermal image derived therefrom;
Fig. 4 shows the images of Fig. 3 selectively dissected; and
Fig. 5 is a side-by-side comparison of the two-dimensional thermal image of Fig. 3 with a graphical representation of the thermal data used to generate the image.

### DETAILED DESCRIPTION OF EXEMPLARY EMBODIMENTS OF THE INVENTION

The following description of technology is merely exemplary in nature of the subject matter, manufacture and use of one or more inventions, and is not intended to limit the scope, application, or uses of any specific invention claimed in this application or in such other applications as can be filed claiming priority to this application, or patents issuing therefrom. Regarding methods disclosed, the order of the steps presented is exemplary in nature, and thus, the order of the steps can be different in various embodiments, including where certain steps can be simultaneously performed. "A" and "an" as used herein indicate "at least one" of the item is present; a plurality of such items can be present, when possible. Except where otherwise expressly indicated, all numerical quantities in this description are to be understood as modified by the word "about" and all geometric and spatial descriptors are to be understood as modified by the word "substantially" in describing the broadest scope of the technology. "About" when applied to numerical values indicates that the calculation or the measurement allows some slight imprecision in the value (with some approach to exactness in the value; approximately or reasonably close to the value; nearly). If, for some reason, the imprecision provided by "about" and/or "substantially" is not otherwise understood in the art with this ordinary meaning, then "about" and/or "substantially" as used herein indicates at least variations that can arise from ordinary methods of measuring or using such parameters.

Although the open-ended term "comprising," as a synonym of non-restrictive terms such as including, containing, or having, is used herein to describe and claim embodiments of the present technology, embodiments can alternatively be described using more limiting terms such as "consisting of" or "consisting essentially of." Thus, for any given embodiment reciting materials, components, or process steps, the present technology also specifically includes embodiments consisting of, or consisting essentially of, such materials, components, or process steps excluding additional materials, components or processes (for consisting of) and excluding additional materials, components or processes affecting the significant properties of the embodiment (for consisting essentially of), even though such additional materials, components or processes are not explicitly recited in this application. For example, recitation of a composition or process reciting elements A, B and C specifically envisions embodiments consisting of, and consisting essentially of, A, B and C, excluding an element D that can be recited in the art, even though element D is not explicitly described as being excluded herein.

As referred to herein, disclosures of ranges are, unless specified otherwise, inclusive of endpoints and include all distinct values and further divided ranges within the entire range. Thus, for example, a range of "from A to B" or "from about A to about B" is inclusive of A and of B. Disclosure of values and ranges of values for specific parameters (such as amounts, weight percentages, etc.) are not exclusive of other values and ranges of values useful herein. It is envisioned that two or more specific exemplified values for a given parameter can define endpoints for a range of values that can be claimed for the parameter. For example, if Parameter X is exemplified herein to have value A and also exemplified to have value Z, it is envisioned that Parameter X can have a range of values from about A to about Z. Similarly, it is envisioned that disclosure of two or more ranges of values for a parameter (whether such ranges are nested, overlapping or distinct) subsume all possible combination of ranges for the value that might be claimed using endpoints of the disclosed ranges. For example, if Parameter X is exemplified herein to have values in the range of 1-10, or 2-9, or 3-8, it is also envisioned that Parameter X can have other ranges of values including 1-9, 1-8, 1-3, 1-2, 2-10, 2-8, 2-3, 3-10, 3-9, and so on.

When an element or layer is referred to as being "on," "engaged to," "connected to," or "coupled to" another element or layer, it can be directly on, engaged, connected or coupled to the other element or layer, or intervening elements or layers can be present. In contrast, when an element is referred to as being "directly on," "directly engaged to," "directly connected to" or "directly coupled to" another element or layer, there can be no intervening elements or layers present. Other words used to describe the relationship between elements should be interpreted in a like fashion (e.g., "between" versus "directly between," "adjacent" versus "directly adjacent," etc.). As used herein, the term "and/or" includes any and all combinations of one or more of the associated listed items.

Although the terms first, second, third, etc. can be used herein to describe various elements, components, regions, layers and/or sections, these elements, components, regions, layers and/or sections should not be limited by these terms. These terms can be only used to distinguish one element, component, region, layer or section from another region, layer or section. Terms such as "first," "second," and other numerical terms when used herein do not imply a sequence or order unless clearly indicated by the context. Thus, a first element, component, region, layer or section discussed below could be termed a second element, component, region, layer or section without departing from the teachings of the example embodiments.

Spatially relative terms, such as "inner," "outer," "beneath," "below," "lower," "above," "upper," and the like, can be used herein for ease of description to describe one element or feature's relationship to another element(s) or feature(s) as illustrated in the figures. Spatially relative terms can be intended to encompass different orientations of the device in use or operation in addition to the orientation depicted in the figures. For example, if the device in the figures is turned over, elements described as "below" or "beneath" other elements or features would then be oriented "above" the other elements or features. Thus, the example term "below" can encompass both an orientation of above and below. The device can be otherwise oriented (rotated 90 degrees or at other orientations) and the spatially relative descriptors used herein interpreted accordingly.

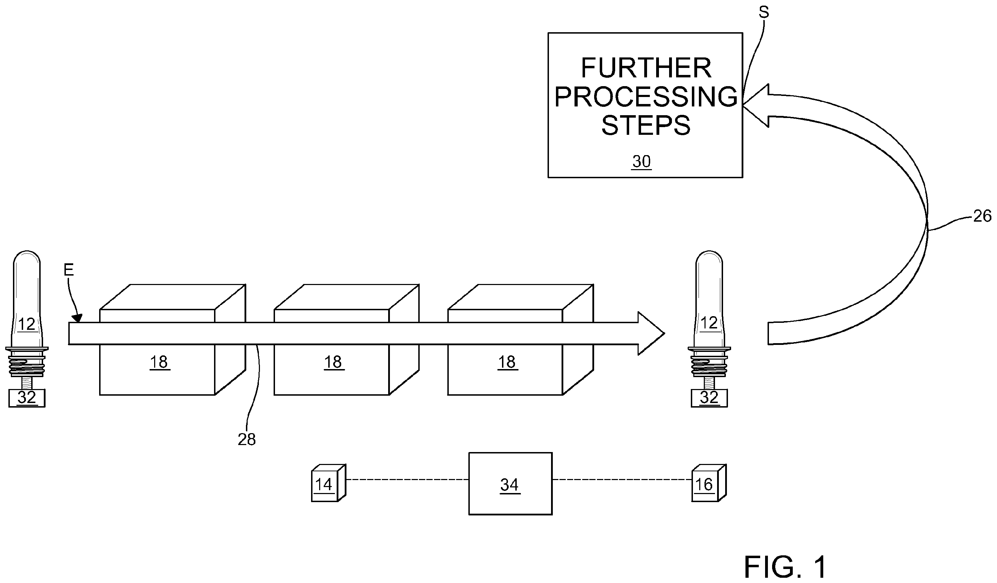

As shown in Fig. 1, the present technology is drawn to method of thermal imaging using a heating system 10 and method for optimizing preform temperature profiles and ways of using such systems, especially in blow molding a container (not shown) from a thermoplastic preform 12. The system 10, explained in more detail hereinbelow, generally includes a first camera 14, a second camera 16, and a heating means 18.

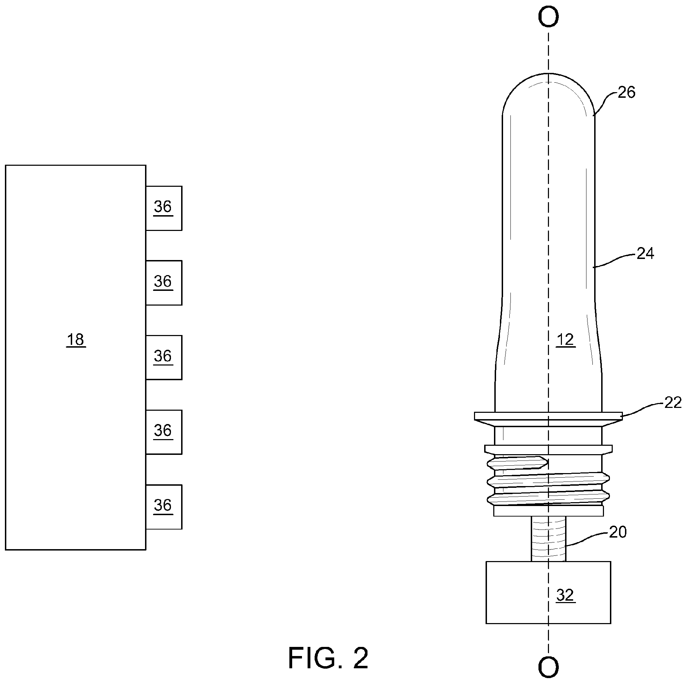

With respect to the preform 12, Fig. 2 shows an exemplary preform 12 having an elongate axis O having an overall shape resembling a test tube. The preform 12 has a neck 20, a shoulder 22, a body 24, and a rounded, closed bottom 26. Typically, the neck 20 and the shoulder 22 is each formed and in its definitive shape as it enters the system 10 and does not need to be heated or thermally imaged as contemplated herein. Accordingly, typically only the body 24 and the bottom 26 are heat treated and thermally imaged by the system 10, though the entire preform 12 may be heated, as desired. The tubular body 24 of the preform 12 is closed at an upper end by the hemispherical bottom 26 and at its lower end comprises the neck 20 which is already in the definitive shape of the neck 20 of the container, the annular shoulder 22 which extends radially outwards roughly delineates the unheated portion of the preform 12 from the heated portion thereof. The preform 12 may be formed of a polyester material, such as polyethylene terephthalate (PET) and other polyesters, polypropylene, acrylonitrile acid esters, vinyl chlorides, polyolefins, polyamides, and the like, as well as derivatives, blends, and copolymers thereof. As shown, the preform 12 has a shape well known to those skilled in the art similar to a test-tube with a generally cylindrical cross section and a length typically approximately fifty percent (50%) that of the resultant container height, or the preform 12 may have any shape, length, and formed from any material, as desired. As explained hereinabove, the heat treatment preformed in the system 10 is intended at preparing the preform 12 for conversion, by blow molding with a gas or a liquid, so as to shape each preform 12 into the container.

In the system 10, each preform 12 is provided at an entrance E of an infeed station by way of a mag-lev track, rail, or other transport mechanism (not shown). The preforms 12 are then individually placed onto a conveyor 28, which transports the preforms 12 through the system 10, as detailed hereinbelow, and ultimately to an exit S of the system 10 for further processing steps 30. The further processing steps 30 may include transporting the preform 12 for one of re-entry into the entrance E for additional heating, rejection and recycling, or to a blow mold loading station (not shown) for forming the preform 12 into the container.

Each preform 12 enters the system 10 (at ambient temperature) disposed on a spindle 24 (as shown in Fig. 2) which allows for the 360° rotation thereof as the preform 12 traverses therethrough. At the entry E, each preform 12 is inspected and measured by a first camera 14. The camera 14 is a visual-inspection camera but the camera 14 may be an infrared camera or any other camera capable of measuring the desired characteristics noted herein of each preform 12. For example, the camera 14 is adapted to inspect, measure, transmit, and/or collect data concerning the preform 12 including, but not limited to, a starting (often times ambient) temperature of the preform 12, the material from which the preform 12 is formed, the material state (i.e., amorphous v. crystalline) of the preform 12, any inclusions (i.e., foreign materials) in the preform 12, an image of the preform 12 with a desired resolution, and the physical dimensions (e.g., height, width, diameter) of the preform 12. The camera is in electronic communication with a computer 34, and/or a process controller (not shown), and/ or other data processor (not shown) capable of processing and/or tabulating the images and date from the first camera 14.

After inspection and measuring by the camera 14, each preform 12 is transported via the conveyor 28 through the system 10 and past a series of heating means 18. The heating means 18 may be an infrared oven, for example, or any suitable heating means as known by one of ordinary skill in the blow molding art. Direct and/or indirect (e.g., reflected) thermal energy can be applied by the heating means 18. Multidirectional application of thermal energy can be used as well as where preforms 12 themselves are moved, spun, or rotated about various thermal radiation sources in the various heating means 18. Any number of heating means 18 may be utilized, as desired, but, as shown in Fig. 1, the system 10 includes three (3) heating means 18. As best shown in Fig. 2, each heating means 18 comprises five (5) heating elements 36 to facilitate heating of each preform 12 at different heights thereof along the longitudinal axis O. It is understood that the number of heating means 18 and the heating elements 36 present in the heating means 18, or operation thereof during a given process, may vary based on the size or specifications of each preform 12, material properties of each preform 12, and the like. The heating means 18 are spaced longitudinally along the conveyor 28 through the system 10 so as to introduce into the preforms 12 a desired temperature profile that will allow for optimization of the distribution of the plastic material during the remaining steps in a pre-stretch and blow molding process. The temperature profile may vary or define a gradient along the longitudinal axis O of each preform 12. Alternatively, the temperature profile may be constant over the length of the preforms 12. Additionally, the temperature profile may vary across the thickness of the preforms 12 with, for example, the material on the exterior of the preform 12 being at a higher temperature than the material on the interior of the preform 12. The actual temperature profile will depend on the specific design of the preform 12, including its shape and material composition, material distribution, and the design of the resulting container to be formed. As each preform 12 passes the heating means 18, each preform 12 is rotated on its spindle 32 thus being heated by the heating means 18 until each preform 12 reaches a second camera 16.

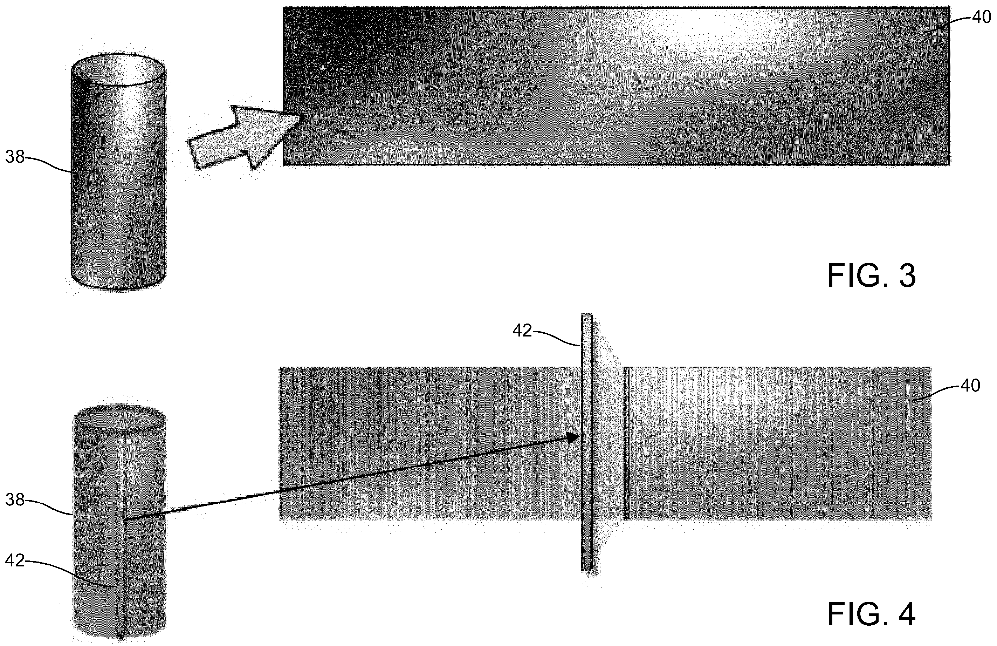

As shown in Fig. 1, the camera 16 is an infrared camera adapted to inspect and measure the temperature of each preform 12 along the longitudinal axis O thereof and around an entire circumference thereof. The camera 16 measures a temperature of the preform 12 along its axis O and circumference at a defined and desired number of data points and/or at a desired resolution (as constrained by the camera 16). For example, data points may correspond to a height of each of the heating elements 36 and/or portions of the preform 12 therebetween along each degree of the circumference of the preform 12 and/or areas therebetween. The camera 16 is in electronic communication with a computer 34 and/ or a process controller and/or other data processor (not shown) capable of processing and/or tabulating the thermal characteristics data measured by the camera 16. For example, the computer 34 converts the thermal characteristics data of the preform 12 into a three-dimensional thermal image 38 of each preform 12, as best shown in Fig. 3. The computer 34 may then convert the three-dimensional thermal image 38 into a two-dimensional thermal image 40 (also known as a heat map). Alternatively, the computer 34 may convert the thermal characteristics data directly into the two-dimensional thermal image 40. The image 40, when viewed left to right, is a representation of a temperature measurement of the preform 12 from about 0° to about 359° taken as the preform 12 rotates on the spindle 30. Thus, the temperature profile of the three-dimensional preform 12 may be viewed in two dimensions. Furthermore, the temperature profile of the preform 12 may be viewed as a whole or at desired discreet pixel or areas, for example, along a longitudinal area 42, as shown in Fig. 4. As an example and as best shown in Fig. 4, the three-dimensional thermal image 38 can be divided into a desired number of longitudinal areas such as, for example, three-hundred fifty-nine (359) longitudinal areas corresponding to each degree of the preform 12 as rotated about its axis O from about 0° to about 359°. In this way, a particular longitudinal area 42 of the three-dimensional thermal image 38 and of the preform 12 itself can be more easily and readily observed on the two-dimensional thermal image 40 without the requirement to access and/or rotate the three-dimensional thermal image 38.

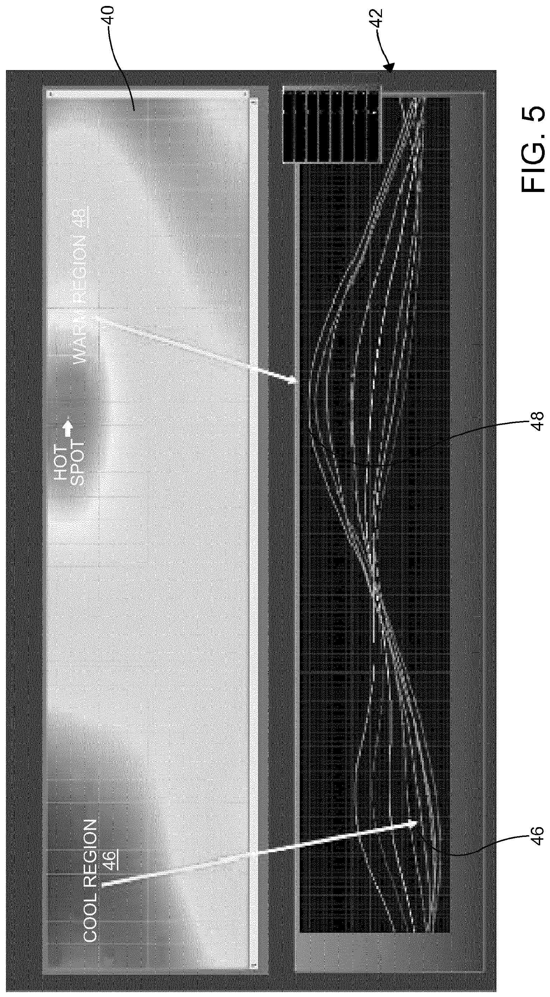

As noted above, the temperatures of the preform 12 are tabulated by the computer 34. The temperatures measured are then plotted against the position of the measurement on the preform 12, as shown in a graph 44 in Fig. 5. As shown on the graph 44, the temperature of the preform 12 at each temperature measurement taken by the camera 14 (x-axis) is plotted against the position of such measurement on the preform 12 (x-axis). In this way, the graph 44, a numerical/ graphical representation of the temperature measurements, can be readily compared and directly correlates to the two-dimensional thermal image 40, a color-based heat map.

By creating the two-dimensional thermal image 40, temperature measurements of each heated preform 12 may be readily and easily ascertained before the preform 12 is transferred to the blow molding station and molded into the final container. In some instances, the thermal images 38, 40, and/or the graph 44 may indicate that a preform 12 has "cool regions" 46 or "warm regions" 48. Such regions 48, 48 may result in blowouts during blow molding, thus requiring remedial action during the heating of the preform 12. Because the exact location of such regions 46, 48 can be pinpointed by observance and analysis of the thermal images 38, 40, and/or the graph 44, remedial action can be taken to ensure proper heating of the preform 12 to minimize blowouts during blow molding thereof into the container. The remedial action may include adjustment of one or more of process parameters and settings of the system 10, including adjustment of the heating means 16 or specific heating elements 36, to increase or decrease the temperature of any portion of the preform 12 (e.g., the regions 46, 48), as desired, so that subsequent preforms have a different and acceptable temperature profile to minimize blowouts during blow molding. Additional remedial actions include, for example, upwardly or downwardly adjusting the spin rate of the spindle 32 upon which each preform 12 is disposed, or increasing or decreasing the residence time of the preform 12 (or speed of the conveyor 28) within the system 10, and/or cooling airflow within the system 10 may be increased or decreased.

In use, the images and/or information obtained from the first camera 14 are processed by the computer 34 to determine the thermal treatment appropriate for each preform 12 is to receive from the heating means 18. For example, the first camera 14 may identify individual preforms formed from different materials or having different sizes corresponding to resulting containers having different volumes. Accordingly, each preform 12 may require its own specific thermal treatment from the heating means 18, and/or the first camera 14 may detect an unacceptable number of inclusions or other unacceptable issues with a particular preform and signal the system 10 via the computer 34 or the process controller to reject that preform and remove it for recycling or destruction. Once each preform 12 receives its thermal treatment from the heating means 18, data is gathered for each preform 12 by the second camera 16. The computer 34 compares the data for each preform 12 as received from the first camera 14 and to data received from the second camera 16 to ensure that the thermal treatment was appropriate and acceptable for the given specifications (e.g., dimensions and/or material) of the preforms 12.

The computer 34 or the process controller may cause adjustments to the system 10 to ensure subsequent preforms 12 of similar specification receive an appropriate thermal treatment by, for example, increasing or decreasing the intensity of the heating means 18, upwardly or downwardly adjusting the spin rate of the spindle 32 upon which each preform 12 is disposed, or increasing or decreasing the residence time of the preform 12 (or speed of the conveyor 28) within the system 10, and/or cooling airflow within the system 10 may be increased or decreased. The computer 34 and/or the process controller will make adjustments to the system 10, as necessary, based on a comparison of images from the cameras 14, 16 and/or data from the cameras 14, 16 with respect to each preform 12. By ensuring that the thermal treatment for each preform 12 is appropriate and acceptable prior to the preform 12 being subjected to a blow molding operation (i.e., the further processing steps 30), blowouts of the preform(s) 12 are minimized and cost savings may be realized.

## Claims

1. A method for heating a preform (12), the method comprising the steps of:
providing a plurality of preforms (12) suitable for blow molding;
heating each preform (12); and
measuring the temperature of at least a portion of each preform (12) along its longitudinal axis (O) and around its circumference;
the method **characterized by** the following steps:
inspecting each preform (12) to identify at least a material from which the preform (12) is formed; and
optimizing the heating step based on a comparison of the measuring step to the inspecting step to ensure each preform (12) has been heated to an acceptable temperature to ensure the heating step for subsequent preforms (12) is optimized for blow molding to militate against blowouts thereof.

2. The method of Claim 1, further comprising a step of compiling the measured temperatures of the at least a portion of each preform (12).

3. The method of Claim 2, further comprising a step of converting the compiled measured temperatures into a three-dimensional thermal image (38) representing the measured temperatures of the at least a portion of the preform (12).

4. The method of Claim 3, wherein the compiled temperatures are converted into a two-dimensional thermal image (40) representing the portion of the preform (12) measured along its longitudinal axis (O) and around its circumference in the converting step.

5. The method of Claim 4, wherein the two-dimensional thermal image (40) is a heat map.

6. The method of Claim 4, wherein during the heating step the preform (12) is caused to rotate at least 360° about its longitudinal axis (O).

7. The method of Claim 5, wherein the heat map (40) represents measurements of the circumference of the preform (12) from about 0° to about 359° of the at least a portion of the preform (12).

8. The method of Claim 2, further comprising a step of converting the compiled temperatures into a graphical image representing the temperatures of the least a portion of the preform (12) against a position of the measurement.

9. The method of Claim 1, wherein the inspecting step is performed by a first camera (14) and the measuring step is performed by a second camera (16).

10. The method of Claim 9, wherein the second camera (16) is an infrared camera.

11. The method of Claim 9, wherein the first camera (14) is a visual-inspection camera.

12. The method of Claim 11, wherein the first camera (14) records an image of the preform (12) with a desired pixilation.

13. The method of Claim 1, wherein the plurality of preforms (12) are not all formed from the same material.

14. The method of Claim 13, wherein each preform (12) is heated based on the inspection step and in accordance with a desired heating profile according to the material from which each preform (12) is formed.

15. The method of Claim 1, wherein at least one of a starting temperature of the preform (12), the material state thereof, a presence of inclusions therein, and the physical dimensions thereof are detected during the inspecting step.

## Patentansprüche

1. Verfahren zum Erhitzen einer Vorform (12), wobei das Verfahren die Schritte umfasst:
Bereitstellen einer Vielzahl von Vorformen (12), die für das Blasformen geeignet sind;
Erhitzen jeder Vorform (12); und
Messen der Temperatur mindestens eines Abschnitts jeder Vorform (12) entlang ihrer Längsachse (O) und um ihren Umfang herum;
wobei das Verfahren durch die folgenden Schritte gekennzeichnet ist:
Überprüfen jeder Vorform (12), um mindestens ein Material zu identifizieren, aus dem die Vorform (12) gebildet ist; und
Optimieren des Erhitzungsschritts basierend auf einem Vergleich des Messschritts mit dem Prüfschritt, um sicherzustellen, dass jede Vorform (12) auf eine akzeptable Temperatur erhitzt wurde, um sicherzustellen, dass der Erhitzungsschritt für nachfolgende Vorformen (12) für das Blasformen optimiert ist, um ein Zerplatzen davon zu verhindern.

2. Verfahren nach Anspruch 1, ferner umfassend einen Schritt des Zusammenstellens der gemessenen Temperaturen des mindestens einen Abschnitts jeder Vorform (12).

3. Verfahren nach Anspruch 2, ferner umfassend einen Schritt des Umwandelns der zusammengestellten gemessenen Temperaturen in ein dreidimensionales Wärmebild (38), das die gemessenen Temperaturen des mindestens einen Abschnitts der Vorform (12) darstellt.

4. Verfahren nach Anspruch 3, wobei die zusammengestellten Temperaturen in ein zweidimensionales Wärmebild (40) umgewandelt werden, das den Abschnitt der Vorform (12) darstellt, der im Umwandlungsschritt entlang ihrer Längsachse (O) und um ihren Umfang herum gemessen wurde.

5. Verfahren nach Anspruch 4, wobei das zweidimensionale Wärmebild (40) eine Wärmekarte ist.

6. Verfahren nach Anspruch 4, wobei während des Erhitzungsschritts die Vorform (12) zum Drehen um mindestens 360° um ihre Längsachse (O) veranlasst wird.

7. Verfahren nach Anspruch 5, wobei die Wärmekarte (40) Messungen des Umfangs der Vorform (12) von etwa 0° bis etwa 359° des mindestens einen Abschnitts der Vorform (12) darstellt.

8. Verfahren nach Anspruch 2, ferner umfassend einen Schritt des Umwandelns der zusammengestellten Temperaturen in ein grafisches Bild, das die Temperaturen des mindestens einen Abschnitts der Vorform (12) gegenüber einer Position der Messung darstellt.

9. Verfahren nach Anspruch 1, wobei der Prüfschritt von einer ersten Kamera (14) durchgeführt wird und der Messschritt von einer zweiten Kamera (16) durchgeführt wird.

10. Verfahren nach Anspruch 9, wobei die zweite Kamera (16) eine Infrarotkamera ist.

11. Verfahren nach Anspruch 9, wobei die erste Kamera (14) eine Kamera zur visuellen Prüfung ist.

12. Verfahren nach Anspruch 11, wobei die erste Kamera (14) ein Bild der Vorform (12) mit einer gewünschten Pixelierung aufnimmt.

13. Verfahren nach Anspruch 1, wobei die Vielzahl von Vorformen (12) nicht alle aus demselben Material gebildet sind.

14. Verfahren nach Anspruch 13, wobei jede Vorform (12) basierend auf dem Prüfschritt und in Übereinstimmung mit einem gewünschten Heizprofil gemäß dem Material, aus dem jede Vorform (12) gebildet ist, erhitzt wird.

15. Verfahren nach Anspruch 1, wobei während des Prüfschritts mindestens eines von einer Starttemperatur der Vorform (12), ihr Materialzustand, das Vorhandensein von Einschlüssen darin und ihre physikalischen Abmessungen detektiert werden.

## Revendications

1. Procédé de chauffage d'une préforme (12), le procédé comprenant les étapes de :
fourniture d'une pluralité de préformes (12) adaptées au moulage par soufflage ;
chauffage de chaque préforme (12) ; et
mesure de la température d'au moins une partie de chaque préforme (12) le long de son axe longitudinal (O) et autour de sa circonférence ;
le procédé étant **caractérisé par** les étapes suivantes :
l'inspection de chaque préforme (12) pour identifier au moins un matériau dont la préforme (12) est formée ; et
l'optimisation de l'étape de chauffage sur la base d'une comparaison de l'étape de mesure à l'étape d'inspection pour s'assurer que chaque préforme (12) a été chauffée à une température acceptable pour s'assurer que l'étape de chauffage pour les préformes (12) ultérieures est optimisée pour le moulage par soufflage pour lutter contre les éclatements de celles-ci.

2. Procédé selon la revendication 1, comprenant en outre une étape de compilation des températures mesurées de l'au moins une partie de chaque préforme (12).

3. Procédé selon la revendication 2, comprenant en outre une étape de conversion des températures mesurées compilées en une image thermique tridimensionnelle (38) représentant les températures mesurées de l'au moins une partie de la préforme (12).

4. Procédé selon la revendication 3, dans lequel les températures compilées sont converties en une image thermique bidimensionnelle (40) représentant la partie de la préforme (12) mesurée le long de son axe longitudinal (O) et autour de sa circonférence pendant l'étape de conversion.

5. Procédé selon la revendication 4, dans lequel l'image thermique bidimensionnelle (40) est une carte thermique.

6. Procédé selon la revendication 4, dans lequel, pendant l'étape de chauffage, la préforme (12) est amenée à tourner sur au moins 360° autour de son axe longitudinal (O).

7. Procédé selon la revendication 5, dans lequel la carte thermique (40) représente des mesures de la circonférence de la préforme (12) d'environ 0° à environ 359° de l'au moins une partie de la préforme (12).

8. Procédé selon la revendication 2, comprenant en outre une étape de conversion des températures compilées en une image graphique représentant les températures de l'au moins une partie de la préforme (12) par rapport à une position de la mesure.

9. Procédé selon la revendication 1, dans lequel l'étape d'inspection est réalisée par un premier appareil de prise de vues (14) et l'étape de mesure est réalisée par un second appareil de prise de vues (16).

10. Procédé selon la revendication 9, dans lequel le second appareil de prise de vues (16) est un appareil de prise de vues infrarouge.

11. Procédé selon la revendication 9, dans lequel le premier appareil de prise de vues (14) est un appareil de prise de vues d'inspection visuelle.

12. Procédé selon la revendication 11, dans lequel le premier appareil de prise de vues (14) enregistre une image de la préforme (12) avec une pixellisation souhaitée.

13. Procédé selon la revendication 1, dans lequel la pluralité de préformes (12) ne sont pas toutes formées du même matériau.

14. Procédé selon la revendication 13, dans lequel chaque préforme (12) est chauffée sur la base de l'étape d'inspection et conformément à un profil de chauffage souhaité en fonction du matériau dont chaque préforme (12) est formée.

15. Procédé selon la revendication 1, dans lequel au moins une température de départ de la préforme (12) et/ou son état de matériau et/ou la présence d'inclusions dans celle-ci et/ou ses dimensions physiques est/sont détecté(e)(s) pendant l'étape d'inspection.
